# EUROPÄISCHE PATENTSCHRIFT

(11) **EP 1 859 521 B1**
(45) Veröffentlichungstag und Bekanntmachung des Hinweises auf die Patenterteilung: **24.08.2011**
(21) Anmeldenummer: 06704748.0
(22) Anmeldetag: 14.03.2006
(51) Int. Cl.: H02G 3/04

(54) **ROHR**
TUBE
TUBE

(30) Priorität: 15.03.2005 AT 4372005
(43) Veröffentlichungstag der Anmeldung: 28.11.2007
(73) Patentinhaber: Dietzel Gesellschaft m.b.H, 1111- Wien (AT)
(72) Erfinder: NEULINGER, Andreas, 1111 Wien (AT)
(74) Vertreter: Ellmeyer, Wolfgang
(86) Internationale Anmeldenummer: PCT/AT2006/000106
(87) Internationale Veröffentlichungsnummer: WO 2006/096896

(56) Entgegenhaltungen:
- DE-U- 1 849 738
- US-A- 4 892 442
- US-A1- 2001 023 767

## Beschreibung

Die Erfindung betrifft ein Elektro-Installations-Wellrohr zur Aufnahme von Leitungen, mit Erhebungen im Inneren des Wellrohres, welche die Auflagefläche für die in das Wellrohr einzuziehenden Leitungen herabsetzen.

Unter Elektro-Installationsrohren werden dabei Installations-Wellrohre aller Art, insbesondere Elektro-Installations-Wellrohre für die Verlegung in Wänden und Decken und Kabelschutzrohre für die Erdverlegung verstanden.

Elektro-Installations-Wellrohre aus Kunststoff sind für die Führung von elektrischen Leitungen und zum Schutz derselben seit Jahrzehnten in Gebrauch. Für die geradlinige Verlegung sind dabei starre Rohre üblich, während ein gekrümmter Verlauf üblicherweise mit biegsamen Wellrohren ausgeführt wird. Letztere bieten die Möglichkeit, auch enge Bogen ohne Zuhilfenahme eines Werkzeuges auszuführen. Andererseits ergibt sich durch die hohe Flexibilität des Wellrohrs eine mehr oder weniger schlangenlinienförmige Verlegung, die für den Einziehvorgang von Drähten viele Reibungsstellen aufweist und es werden enge Bogen ermöglicht, in denen hohe Reibungskräfte auftreten können.

Dies führt dazu, daß bei manchen Rohrverlegungen entweder nicht die beabsichtigte Anzahl an Drähten eingezogen werden kann oder die Drähte während des Einziehvorganges an einer Stelle des Rohrverlaufes stecken bleiben und weder vor noch zurückbewegt werden können. Als Beeinträchtigung für den Monteur ist aber auch schon anzusehen, wenn sich das Einziehen der Drähte oder der Kabel nur mit äußerster Kraftanstrengung durchführen läßt.

Bisher wurde versucht, die Oberflächenreibung durch chemische Zusätze zum Material, durch Vorsehen von Gleitbelagen, z.B. mittels Koextrusion, oder durch nachträgliches Aufbringen von Gleitbeschichtungen zu vermindern. Das Ergebnis dieser Bemühungen ist nicht zufriedenstellend.

In der DE 1 849 738 U ist ein Wellrohr beschrieben, welches mit Längsriefungen ausgestattet ist, die durch eine in Umfangsrichtung ausgeführte Wellung der Rohrwand über einen Umfangsteilbereich gebildet sind, durch welche die Rohrwand nach außen hin in gleichmäßigen Abständen vertieft ist. Die dadurch gebildeten, längs verlaufenden Auflagebereiche in der Rohrwand verringern zwar die Auflagefläche für die einzuziehenden Leitungen, lassen aber eine Vielzahl von Biegestellen entstehen, die als Gelenke wirken und die Stabilität und Festigkeit des Rohres deutlich herabsetzen. An Stellen, an denen das Rohr gebogen wird, kommt es zu einer nachteiligen Abstandsverkleinerung zwischen den benachbarten linienförmigen Auflagebereichen, wodurch der Effekt der Herabsetzung der Auflagefläche wieder zunichte gemacht wird.

Die US 4 892 442 A offenbart ein weitgehend starres, zweiteiliges Rohr, dessen Innentell neben einer reibungsmindernden Beschichtung an der Innen- und Außenwandung vorstehende Längsrippen zur Herabsetzung des Reibungswiderstandes aufweist. Die in Fig.5 dieser Druckschrift gezeigte alternative Ausführungsform weist anstelle der Längsrippen Querwellen auf, die ausschließlich der Erleichterung des Einziehvorganges und nicht der Erhöhung der Biegsamkeit des Installationsrohres dienen.

Aufgabe der Erfindung ist es, ein Elektro-Installations-Wellrohr anzugeben, welches das Einziehen von Drähten erleichtert und die Oberflächenreibung der inneren Oberfläche herabsetzt.

Erfindungsgemäß wird dies dadurch erreicht, daß die Erhebungen durch in Längsrichtung verlaufende Auflagestege ausgebildet sind, die an die innere Rohroberfläche angeformt sind.

Durch diese besondere Ausbildung der inneren Rohroberfläche kann das Einbringen von Leitungen wesentlich schneller und mit geringerem Kraftaufwand über längere Rohrlängen bewerkstelligt werden. Im Unterschied zu den bekannten chemischen Gleitmittelzusätzen handelt es sich hiebei um eine Strukturierung der inneren Oberfläche des erfindungsgemäßen Elektro-Installations-Wellrohres. Die für ein Einziehen oder Einschieben von Leitungen erforderliche Kraft kann deutlich herabgesetzt werden, welcher Effekt auch meßbar ist. Zugleich bedeutet dies eine Erhöhung der maximal verlegbaren Rohrlänge, bei der noch Leitungen eingezogen werden können. Das erfindungsgemäße Elektroinstallations-Wellrohr kann auch ohne Gleitprobleme zu verursachen mit einem wesentlich engeren Bogen als herkömmliche Rohre verlegt werden, ein schlangenförmiger Verlauf behindert das Einziehen der Leitungen nur unwesentlich.

Die als in Längsrichtung verlaufende Auflagestege ausgebildeten Erhebungen sind einfach extrudierbar. Die Anordnung der Längs-Auflagestege geschieht dabei bevorzugt so, daß die Reibung zwischen einzuziehendem Draht und Rohrinnenoberfläche herabgesetzt wird.

In Weiterbildung der Erfindung können die Auflagestege in Längsrichtung der Abfolge von Wellentälern und Wellenbergen an der inneren Rohroberfläche folgend ausgebildet sein, und wobei die Auflagestege jeweils im Bereich der Wellentäler wirksam sein können.

Um in alle Richtungen die gleiche Reduktion des Gleitwiderstandes zu erzielen, können die Auflagestege - im Querschnitt gesehen - gleichmäßig über den Rohrinnenumfang verteilt sein.

Die Ausgestaltung der Auflagestege kann in vielfältiger Weise variieren. So kann die Umfangsteilung der Auflagestege im Bereich von 3° bis 30°, vorzugsweise von 10° bis 15° liegen.

Eine weitere Ausführungsform der Erfindung kann darin bestehen, daß die Auflagestege einen keilförmigen, vorzugsweise gleichschenkeligen, Querschnitt aufweisen. Dieser bewirkt in Längsrichtung des Rohres annähernd linienförmige Auflageflächen für die einzuziehenden Leitungen.

Flankenwinkel und Flankentiefe dieser keilförmigen Erhebungen können dem Rohrdurchmesser, dem Rohrmaterial und den einzuziehenden Drähten angepaßt werden.

So kann der Flankenwinkel α zwischen den Keilflächen der Auflagestege im Bereich von 15° bis 90° und die Flankentiefe t im Bereich von 0,1 mm und 2 mm liegen.

Als weitere Maßnahme zur Verbesserung der Gleiteigenschaften des erfindungsgemäßen Rohres können - im Querschnitt gesehen - die Spitzen der keilförmigen Auflagestege eine Kantenverrundung r2 im Bereich von 0,1 mm bis 2 mm aufweisen.

Sollbruchstellen bei der Herstellung werden vermieden, wenn der Flankengrund zwischen zwei Keilflächen benachbarter Auflagestege mit einer Ausrundung, vorzugsweise mit einem Radius r1 von mindestens 0,1 mm versehen ist.

Die Form der Auflagestege kann den Anforderungen angepaßt werden. So können sie z.B. einen rechteckförmigen oder halbkreisförmigen Querschnitt aufweisen, wenn sich dies für die Art der einzuziehenden Leitungen als günstig erweist.

Beim Ausformen der Erhebungen bzw. Auflagestege durch einen Extrudiervorgang kann die Wandstärke des Rohres zwischen diesen sich ausdünnen, weswegen in Weiterbildung der Erfindung vorgesehen sein kann, daß zwischen den Erhebungen bzw. Auflagestegen Bereiche ausgebildet sind, in denen die Rohrwand Verdickungen aufweist.

Die Erfindung wird anhand von in den beigeschlossenen Zeichnungen dargestellten Ausführungsbeispielen eingehend erläutert. Es zeigt dabei
Fig.1 ein Teilstück einer Ausführungsform des erfindungsgemäßen Elektro-Installationsrohres im Schrägriß, das in Längsrichtung aufgeschnitten ist;
Fig.2 eine weitere Schrägriß-Ansicht des Elektro-Installationsrohres gemäß Fig.1;
Fig.3 eine schematische Darstellung der Innenoberfläche einer weiteren Ausführungsform des erfindungsgemäßen Elektro-installationsrohres im Querschnitt;
Fig.4 eine schematische Darstellung der Innenoberfläche einer weiteren Ausführungsform des erfindungsgemäßen Elektro-Installationsrohres im Querschnitt;
Fig.5 eine schematische Darstellung der Innenoberfläche einer weiteren Ausführungsform des erfindungsgemäßen Elektro-Installationsrohres im Querschnitt;
Fig.6 einen teilweisen vergrößerten Schnitt durch das Elektro-installationsrohr gemäß Fig.1;
Fig.7 eine vergrößerte Schrägrißdarstellung eines Rohrteils gemäß Fig.1;
Fig.8 einen teilweisen Längsschnitt durch eine weitere Ausführungsform des erfindungsgemäßen Elektro-Installationsrohres;
Fig.9 einen teilweisen Querschnitt durch das Elektro-Instaliationsrohr gemäß Fig.8 und
Fig.10. 11 und 12 isometrische Ansichten des Elektro-Installationsrohres gemäß Fig.8.

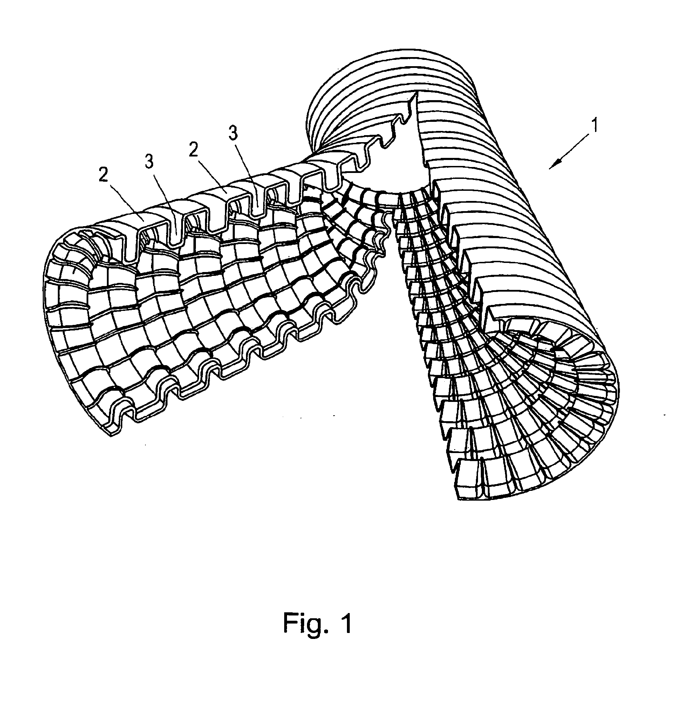

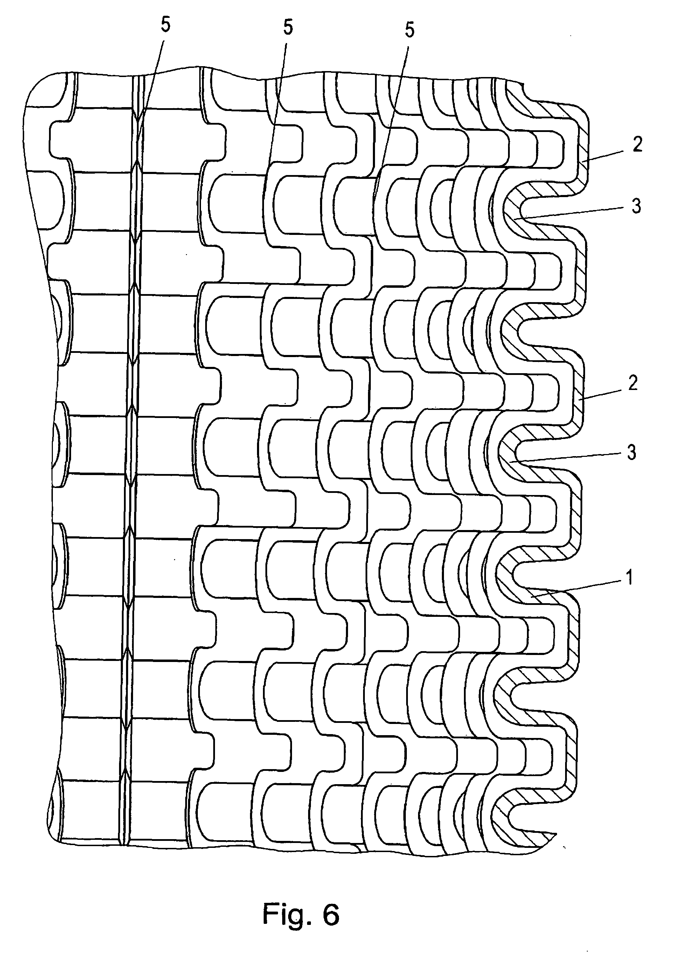

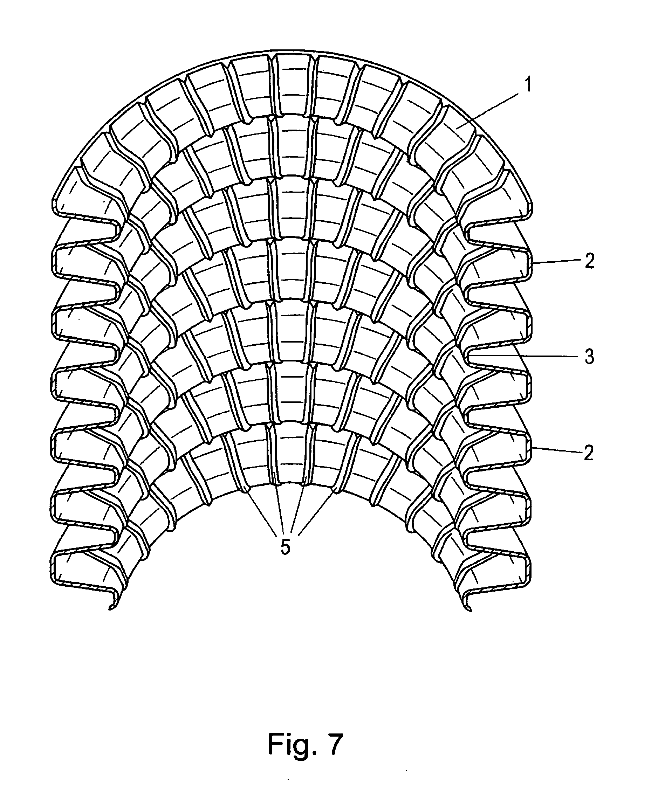

Fig.1, 2, 6 und 7 zeigen ein zum Zwecke der besseren Darstellung der Länge nach aufgeschnittenes Elektro-Installationsrohr 1 zur Aufnahme von nicht dargestellten Leitungen, die nach der Installation eingezogen werden. Alternativ dazu kann das Elektro-Installationsrohr auch mit bereits eingezogenen Leitungen verlegt werden.

Unter Leitungen werden dabei elektrische Drähte, z.B. Ye 1,5 und Kabel oder optische Leitungen, wie z.B. Lichtleiter verstanden, die z.B. in Elektroinstallationen Anwendung finden, die z.B. in Wänden, Decken oder im Boden ausgeführt sind.

Bei dem in Fig.1, 2, 6 und 7 gezeigten Ausführungsbeispiel ist das Elektro-Installationsrohr durch ein Wellrohr 1 aus Kunststoff gebildet, dessen Oberfläche zur Erhöhung der Biegsamkeit in Längsrichtung mit Wellentälern 3 und Wellenbergen 2 ausgebildet ist. Es können im Rahmen der Erfindung aber auch andere Bauarten von Elektro-Installationsrohren, die biegsam oder starr sein können, Anwendung finden.

Erfindungsgemäß sind an die innere Rohroberfläche Erhebungen 4 angeformt, welche die Auflagefläche für die in das Elektro-Installationsrohr 1 einzuziehenden Leitungen herabsetzen. Diese Erhebungen können in vielfältiger Art gestaltet sein, sie dienen dem Zweck eine zerklüftete Innenrohroberfläche auszubilden und damit den Reibungswiderstand gegenüber den einzuziehenden Leitungen herabzusetzen.

In der Ausführungsform gemäß Fig.1, 2, 6 und 7 sind diese Erhebungen 4 als in Längsrichtung verlaufende Auflagestege 5 ausgebildet. Es könnten die Erhebungen 4 aber in Abweichung von diesem geradlinigen Verlauf entlang der Längsachse gewunden ausgeführt sein oder aber auch in vollkommen unregelmäßiger Weise über die Innenrohroberfläche verteilt angeordnet und statt linienförmig punkt- oder inselförmig ausgeprägt sein.

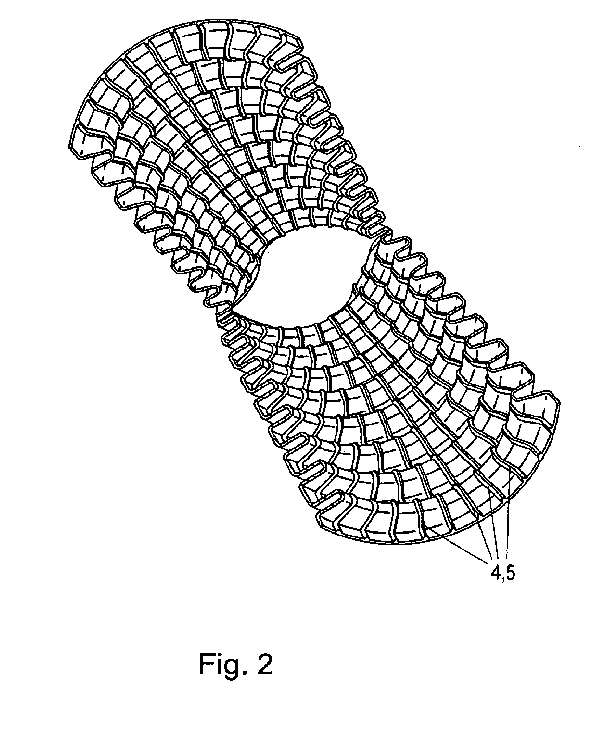

In der Ausführungsform gemäß Fig.1 und 2 sind die Auflagestege 5 - im Querschnitt gesehen - gleichmäßig über den Rohrinnenumfang verteilt und in Längsrichtung der Abfolge von Wellentälern 3 und Wellenbergen 2 an der inneren Rohroberfläche folgend ausgebildet, wobei die Auflagestege 5 jeweils im Bereich der Wellentäler 3 wirksam sind.

Dabei liegt die Umfangsteilung der Auflagestege 5 bevorzugt in einem Bereich von 3° bis 30°, in noch bevorzugter Weise von 10° bis 15°.

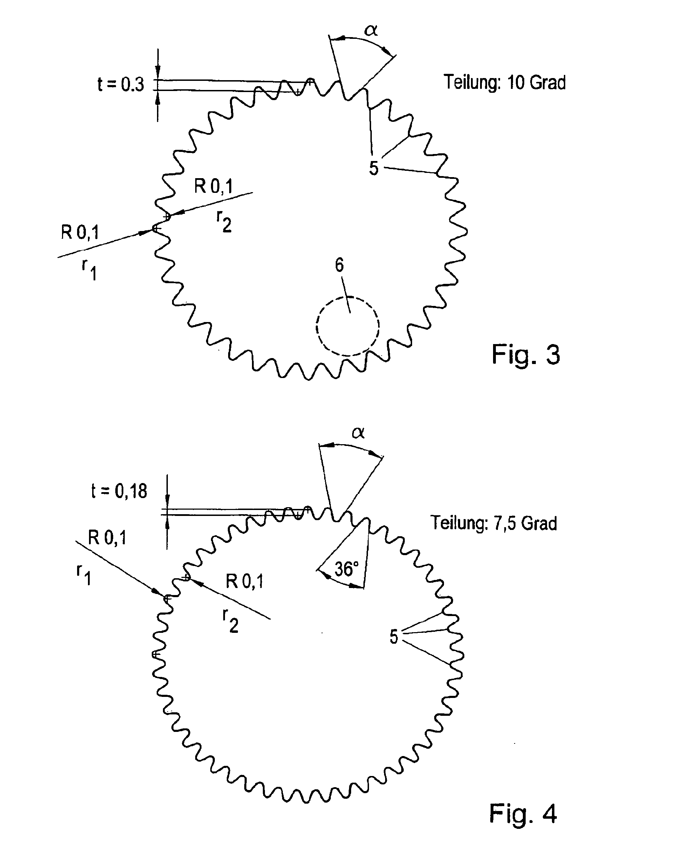

Im Ausführungsbeispiel gemäß Fig.3 ist eine Umfangsteilung von 10° gezeigt. Ein Drahtquerschnitt 6 einer zu verlegenden Leitung ist strichliert dargestellt. Die Verringerung der Auflagefläche und damit die Herabsetzung des Reibungswiderstandes ist erkennbar.

Als Vergleich weist die Ausführungsform des erfindungsgemäßen Elektro-Installationsrohres gemäß Fig.4 eine Umfangsteilung von 7,5° auf.

In allen gezeigten Ausführungsbeispielen weisen die Auflagestege 5 einen keilförmigen, vorzugsweise gleichschenkeligen, Querschnitt auf. Der Flankenwinkel α zwischen den Keilflächen der Auflagestege 5 liegt bevorzugt im Bereich von 15° bis 90°. In der Ausführungsform gemäß Fig.3 beträgt der Flankenwinkel α = 68° und die Flankentiefe t = 0,3 mm, wohingegen in der Ausführungsform gemäß Fig.4 α = 43° und t= 0,18 mm ist. Bevorzugt liegt die Flankentiefe t im Bereich von 0,1 mm und 2 mm.

Der Flankengrund zwischen zwei Keilflächen benachbarter Auflagestege 5 ist mit einem Radius r1 = 0,1 mm und die Spitzen der Auflagestege 5 sind mit einem Radius r2 = 0,1 mm, bevorzugt bis zu 2 mm ausgestattet (Fig.3, Fig.4). Diese Abrundungen können aber auch weggelassen werden.

Der Querschnitt der Auflagestege kann auch mit anderen Querschnittsformen ausgebildet sein, z.B. rechteckförmig oder halbkreisförmig.

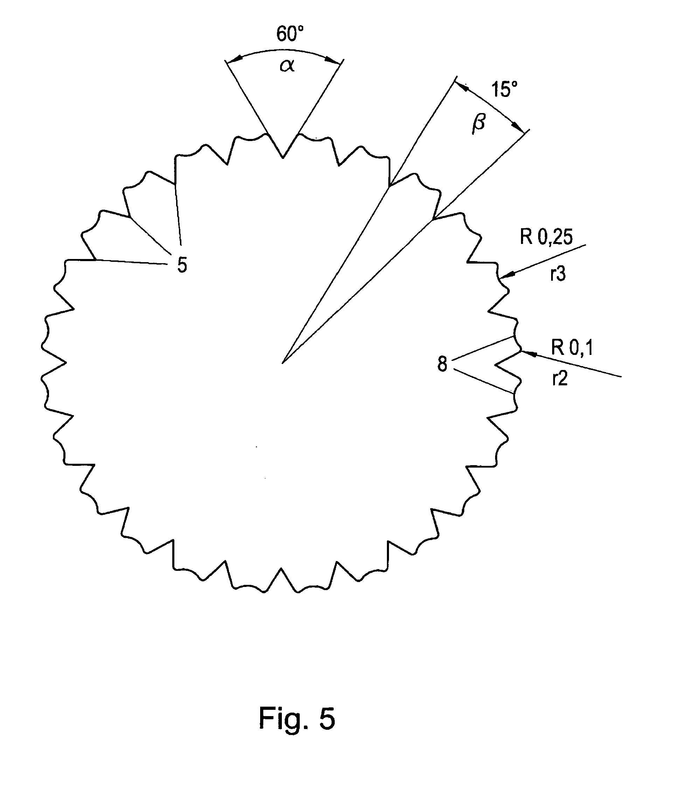

Bei einem weiteren, in Fig.5 gezeigten Ausführungsbeispiel der Erfindung sind zwischen den keilförmigen Auflagestegen 5 Bereiche ausgebildet, in denen die

Rohrwand Verdickungen 8 aufweist, die in Längsrichtung geführt sind. Letztere sind z.B. mit einer Rundung r3 =0,25 ausgebildet. Es werden damit bei der Extrusion auftretende Ausdünnungen zwischen den Auflagestegen vermieden. Der Flankenwinkel α beträgt in diesem Ausführungsbeispiel 60° und die Teilung β ist mit 15°gewählt.

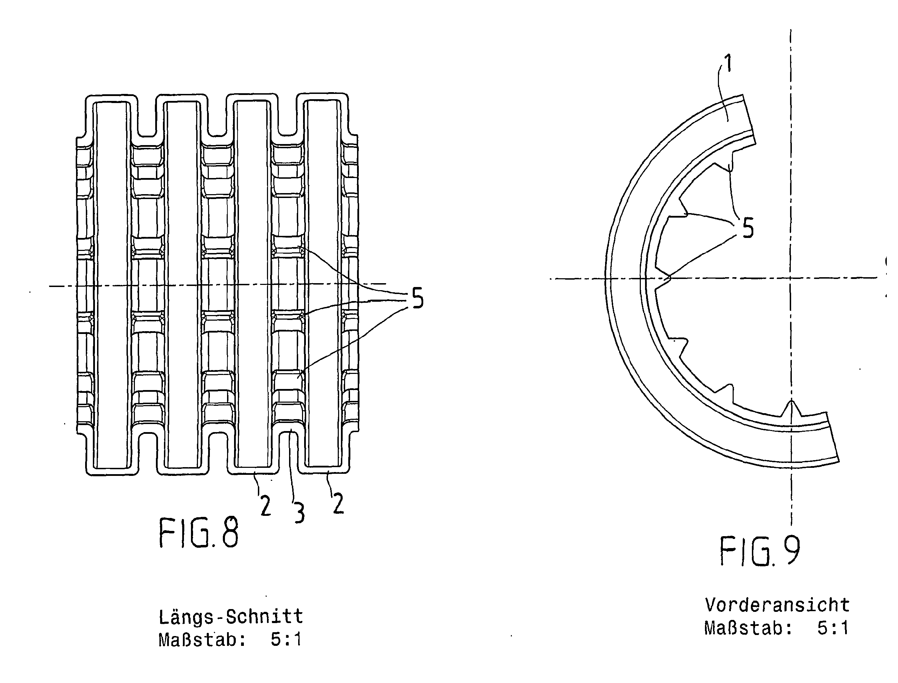

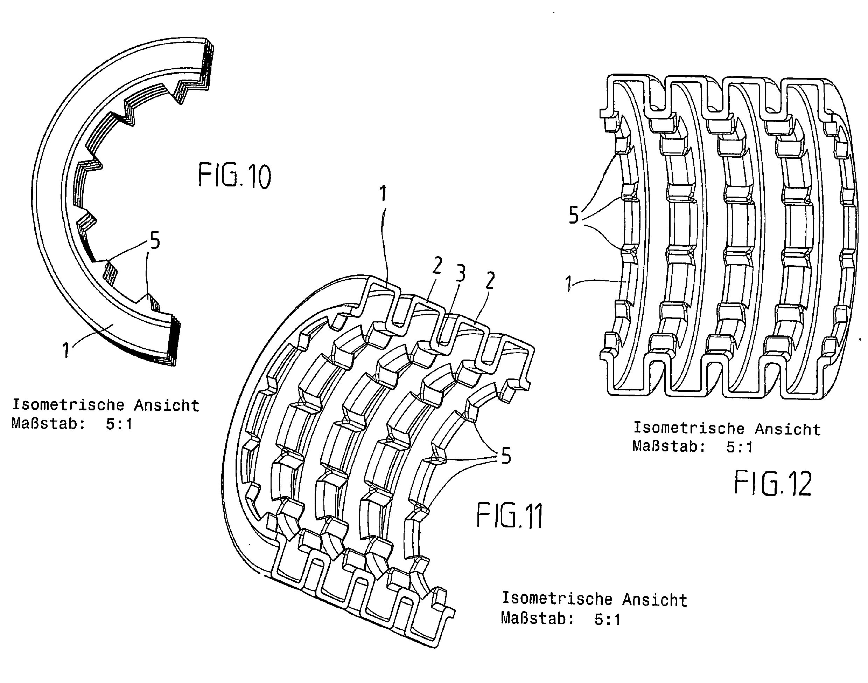

Im Ausführungsbeispiel gemäß Fig.8 bis 12 sind die keilförmigen Auflagestege 5 auf den Wellentälern 3 des Wellrohrs 1 angeformt. Die Umfangsteilung beträgt 60°. Die Bereiche zwischen den Auflagestegen 5 sind nicht verdickt. In den Fig.8 bis 12 ist der linienförmige Verlauf der Auflagestege in Längsrichtung des erfindungsgemäßen Elektro-Installationsrohres 1 zu erkennen.

## Patentansprüche

1. Elektro-Installations-Wellrohr (1) zur Aufnahme von Leitungen, mit Erhebungen (4) im Inneren des Wellrohres (1), welche die Auflagefläche für die in das Wellrohr (1) einzuziehenden Leitungen herabsetzen, **dadurch gekennzeichnet, daß** die Erhebungen (4) durch in Längsrichtung verlaufende Auflagestege (5) ausgebildet sind, die an die innere Rohroberfläche angeformt sind.

2. Elektro-installations-Wellrohr nach Anspruch 1, **dadurch gekennzeichnet, daß** die Auflagestege (5) in Längsrichtung der Abfolge von Wellentälern (3) und Wellenbergen (2) an der inneren Rohroberfläche folgend ausgebildet sind, wobei die Auflagestege (5) jeweils im Bereich der Wellentäler wirksam sind.

3. Elektro-Installations-Wellrohr nach Anspruch 1 oder 2, **dadurch gekennzeichnet, daß** die Auflagestege (5) - im Querschnitt gesehen - gleichmäßig über den Rohrinnenumfang verteilt sind.

4. Elektro-Installations-Wellrohr nach Anspruch 3, **dadurch gekennzeichnet, daß** die Umfangsteilung der Auflagestege (5) im Bereich von 3° bis 30°, vorzugsweise von 10° bis 15° liegt.

5. Elektro-Installations-Wellrohr nach einem der Ansprüche 1 bis 4, **dadurch gekennzeichnet, daß** die Auflagestege (5) einen keilförmigen, vorzugsweise gleichschenkeligen, Querschnitt aufweisen.

6. Elektro-Installations-Wellrohr nach Anspruch 5, **dadurch gekennzeichnet, daß** der Flankenwinkel α zwischen den Keilflächen der Auflagestege im Bereich von 15° bis 90° liegt.

7. Elektro-Installations-Wellrohr nach Anspruch 5 der 6, **dadurch gekennzeichnet, daß** die Flankentiefe t im Bereich von 0,1 mm und 2 mm liegt.

8. Elektro-Installations-Wellrohr nach Anspruch 5, 6 oder 7, **dadurch gekennzeichnet, daß** der Flankengrund zwischen zwei Keilflächen benachbarter Auflagestege mit einer Ausrundung, vorzugsweise mit einem Radius r1 von mindestens 0,1 mm versehen ist

9. Elektro-Installations-Wellrohr nach einem der Ansprüche 5 bis 8, **dadurch gekennzeichnet, daß** - im Querschnitt gesehen - die Spitzen der keilförmigen Auflagestege eine Kantenverrundung r2 im Bereich von 0,1 mm bis 2 mm aufweisen.

10. Elektro-Installations-Wellrohr nach einem der Ansprüche 1 bis 4, **dadurch gekennzeichnet, daß** die Auflagestege einen rechteckförmigen oder halbkreisförmigen Querschnitt aufweisen.

11. Elektro-Installations-Wellrohr nach einem der vorhergehenden Ansprüche, **dadurch gekennzeichnet, daß** zwischen den Auflagestegen (5) Bereiche ausgebildet sind, in denen die Rohrwand Verdickungen (8) aufweist.

## Claims

1. A corrugated conduit tube for electrical installations (1) to accommodate wiring, with projections (4) in the interior of the corrugated conduit (1) to reduce the contact surface with the wiring to be pulled into the corrugated conduit (1), **characterized in that** the projections (4) are provided by means of support ridges (5) extending longitudinally that are moulded on the tube interior surface.

2. A corrugated conduit tube for electrical installations according to claim 1, **characterized in that** the support ridges (5) are formed in the longitudinal direction following the succession of grooves (3) and peaks (2) on the tube interior surface, wherein the support ridges (5) are effective in the respective groove areas.

3. A corrugated conduit tube for electrical installations according to claim 1 or claim 2, **characterized in that** the support ridges (5) are - as seen in cross-section - distributed uniformly along the tube inside circumference.

4. A corrugated conduit tube for electrical installations according to claim 3, **characterized in that** the circumferential pitch of the support ridges (5) is in the range of 3° to 30°, preferably of 10° to 15°.

5. A corrugated conduit tube for electrical installations according to one of the claims 1 to 4, **characterized in that** the support ridges (5) have wedge-shaped, preferably isosceles, cross-sections.

6. A corrugated conduit tube for electrical installations according to claim 5, **characterized in that** the flank angle α between the wedge surfaces of the support ridges is in the range of 15° to 90°.

7. A corrugated conduit tube for electrical installations according to claim 5 or claim 6, **characterized in that** the flank depth t is in the range of 0.1 mm to 2 mm.

8. A corrugated conduit tube for electrical installations according to claim 5, 6, or 7, **characterized in that** the flank base between two wedge surfaces of neighbouring support ridges is provided with a rounding, preferably with a radius r1 of at least 0.1 mm.

9. A corrugated conduit tube for electrical installations according to one of the claims 5 to 8, **characterized in that** the tips of said wedge-shaped support ridges - as seen in cross-section - have an edge rounding r2 in the range of 0.1 mm to 2 mm.

10. A corrugated conduit tube for electrical installations according to one of the claims 1 to 4, **characterized in that** the support ridges have rectangular or semicircular cross-sections.

11. A corrugated conduit tube for electrical installations according to one of the preceding claims, **characterized in that** areas are formed between the support ridges (5) where the tube wall has thickenings (8).

## Revendications

1. Tube d'installation électrique ondulé (1) pour contenir des lignes avec des bosses (4) à l'intérieur dudit tube ondulé (1) qui réduisent la surface de contact avec les lignes à insérer dans ledit tube ondulé (1), **caractérisé en ce que** lesdites bosses (4) sont formées par des nervures d'appui (5) qui sont formées sur la surface intérieure dudit tube et s'étendent dans la direction longitudinale.

2. Tube d'installation électrique ondulé selon la revendication 1, **caractérisé en ce que** lesdites nervures d'appui (5) sont formées sur la surface intérieure dudit tube et suivent la succession de creux (3) et de sommets (2), chacune desdites nervures d'appui (5) étant effective au niveau des creux.

3. Tube d'installation électrique ondulé selon la revendication 1 ou 2, **caractérisé en ce qu'**en coupe transversale, lesdites nervures d'appui (5) sont distribuées de manière régulière le long de la circonférence intérieure dudit tube.

4. Tube d'installation électrique ondulé selon la revendication 3, **caractérisé en ce que** le pas circonférentiel desdites nervures d'appui (5) est de 3° à 30°, de préférence de 10° à 15°.

5. Tube d'installation électrique ondulé selon l'une des revendications 1 à 4, **caractérisé en ce que** lesdites nervures d'appui (5) ont une section en forme de clavette, qui est de préférence isocèle.

6. Tube d'installation électrique ondulé selon la revendication 5, **caractérisé en ce que** l'angle de flanc α entre les surfaces de clavette desdites nervures d'appui est de 15° à 90°.

7. Tube d'installation électrique ondulé selon la revendication 5 ou 6, **caractérisé en ce que** l'hauteur des flancs est de 0,1 mm à 2 mm.

8. Tube d'installation électrique ondulé selon la revendication 5, 6 ou 7, **caractérisé en ce que** la base des flancs entre deux surfaces de clavette de deux nervures d'appui adjacentes présente un congé, de préférence avec un rayon r1 d'au moins 0,1 mm.

9. Tube d'installation électrique ondulé selon l'une des revendications 5 à 8, **caractérisé en ce qu'**en section transversale, la pointe des nervures d'appui en forme de clavette est arrondie avec un rayon r2 de 0,1 mm à 2 mm.

10. Tube d'installation électrique ondulé selon l'une des revendications 1 à 4, **caractérisé en ce que** les nervures d'appui ont une section rectangulaire ou demi-circulaire.

11. Tube d'installation électrique ondulé selon l'une des revendications précédentes, **caractérisé en ce que** des domaines dans lesquels la paroi dudit tube présente des parties plus épaisses (8) sont formés entre les nervures d'appui (5).
